Europäisches Patentamt

European Patent Office

Office européen des brevets

(19)

(11) **EP 1 245 059 B1**

(12) **EUROPÄISCHE PATENTSCHRIFT**

(45) Veröffentlichungstag und Bekanntmachung des Hinweises auf die Patenterteilung:
**13.09.2006 Patentblatt 2006/37**

(21) Anmeldenummer: **00943921.7**

(22) Anmeldetag: **28.06.2000**

(51) Int Cl.:
***H01Q 1/32*** *(2006.01)* ***G01S 13/93*** *(2006.01)*

(86) Internationale Anmeldenummer:
**PCT/EP2000/006010**

(87) Internationale Veröffentlichungsnummer:
**WO 2001/009975 (08.02.2001 Gazette 2001/06)**

(54) **RADARSENSOR FÜR EIN ÜBERWACHEN DER UMGEBUNG EINES KRAFTFAHRZEUGES**

RADAR SENSOR FOR MONITORING THE ENVIRONMENT OF A MOTOR VEHICLE

DETECTEUR RADAR POUR LA SURVEILLANCE DE L'ENVIRONNEMENT D'UN VEHICULE A MOTEUR

(84) Benannte Vertragsstaaten:
**DE ES FR GB IT SE**

(30) Priorität: **30.07.1999 DE 19935542**
**23.10.1999 DE 19951123**

(43) Veröffentlichungstag der Anmeldung:
**02.10.2002 Patentblatt 2002/40**

(60) Teilanmeldung:
**04003209.6 / 1 420 266**
**04003251.8 / 1 420 267**
**05028254.0 / 1 647 836**

(73) Patentinhaber: **Volkswagen Aktiengesellschaft**
**38436 Wolfsburg (DE)**

(72) Erfinder:
 • **LISSEL, Ernst**
  **D-38442 Wolfsburg (DE)**
 • **JACOB, Arne**
  **D-38116 Braunschweig (DE)**
 • **SCHLACHETZKI, Andreas**
  **D-38126 Braunschweig (DE)**
 • **WEHMANN, Hergo-H.**
  **D-38527 Meine (DE)**
 • **PEINER, Erwin**
  **D-38108 Braunschweig (DE)**
 • **SCHRÖTER, Holger**
  **D-81371 München (DE)**
 • **OBERSCHMIDT, Gerald**
  **D-76646 Bruchsal (DE)**
 • **METZ, Carsten**
  **TWP Chatham, New Jersey 07928 (US)**

(74) Vertreter: **Meyer, Enno**
 **Augsburger Strasse 24**
 **82110 Germering (DE)**

(56) Entgegenhaltungen:
 **WO-A-99/27385       US-A- 5 929 802**

 • **RUSSELL E ET AL: "MILLIMETER-WAVE RADAR SENSOR FOR AUTOMOTIVE INTELLIGENT CRUISE CONTROL (ICC)" IEEE TRANSACTIONS ON MICROWAVE THEORY AND TECHNIQUES, US,IEEE INC. NEW YORK, Bd. 45, Nr. 12, PART 02, 1. Dezember 1997 (1997-12-01), Seiten 2444-2452, XP000732032 ISSN: 0018-9480 in der Anmeldung erwähnt**

EP 1 245 059 B1

**Beschreibung**

Die vorliegende Erfindung betrifft einen Radarsensor der insbesondere für ein Überwachen der Umgebung eines Kraftfahrzeuges geeignet sind.

Derartige Radarsensoren werden für unterschiedliche Komfort- und sicherheitsrelevante Fahrerassistenz-Systeme benötigt. Sie verwenden in Fahrtrichtung nach vorne ausgerichtete Sensoren, um Informationen über den Verkehr und Hindernisse auf der Straße zu sammeln. Diese Informationen werden von dem zugeordneten Fahrerassistenz-System verwendet, um eine automatische Distanzregelung oder eine automatische Notbremsfunktion durchzuführen oder für Anwendungen aus dem Bereich der adaptiven Fahrtregelung, der Kollisionsverhinderung und für das zukünftige autonome Fahren von Fahrzeugen zu verwenden.

Aus der IEEE Transactions on Mircowave Theory and Techniques, VOL. 45, NO. 12 Dezember 1997, "Milimeter-Wave Radar Sensor for Automotive Intelligent Cruise Control (ICC)", M. E. Russell et al. ist ein Radarsensor bekannt, der eine Steuerschaltung und eine Radarantenne aufweist, wobei die Steuerschaltung als Sende- und Empfangsmodul ausgebildet ist und wobei die Radarantenne mit mindestens einer Zuleitung mit der Steuerschaltung verbunden ist. Ein Teil der Steuerschaltung ist dabei als MMIC (monolithic millimeterwave integrated circuit) ausgebildet. Darüber hinaus ist die Radarantenne in Form eines gedruckten Schaltkreises ausgebildet und weist eine Rotmanlinse und eine Gruppenantenne auf. Die Rotmanlinse weist eine linsenförmige Parallelplattenleitung, mindestens zwei Zuleitungsanschlüsse, eine Mehrzahl von Ankopplungsanschlüssen und Verzögenrngsleitungen auf. Weiterhin ist die Gruppenantenne aus einer Mehrzahl von Einzelantennen aufgebaut, die zu mindestens zwei Reihen in Serie geschaltet sind. Jede dieser Reihe von Einzelantennen ist mit einer Verzögerungsleitung verbunden, die das von der parallelplattenleitung an den zugeordneten Ankopplungsanschluß abgegebene hochfrequente Signal auf die Reihe von Einzelantennen überträgt.

Bei dem zuvor dargestellten Radarsensor besteht das Problem in der Verbindung bzw. Ankopplung der MMIC-Bausteine an die Radarantenne, da unterschiedlich dimensionierte und auf verschiedenen Substraten angeordnete Schaltkreise miteinander verbunden werden müssen. Dabei treten häufig Verluste auf, da die Verbindungsleitungen nicht optimal an die Übertragung von hochfrequenten Signalen angepaßt sind.

Ein weiterer Nachteil bei der aus dem Stand der Technik bekannten Radarantenne besteht darin, daß bei der Übertragung der hochfrequenten Signale zwischen der Gruppenantenne und der Rotmanlinse zwar eine definierte Phasenbeziehung zwischen den jeweiligen Reihen der Einzelantennen und den zugeordneten Ankopplungsanschlüssen der Rotmanlinse gegeben ist. Jedoch ist eine variable Amplitudenverteilung der Hochfrequenzsignale auf die separaten Reihen von Einzelantennen der Gruppenantenne bei dieser Radarantenne nicht möglich. Dadurch kann die Richtungscharakteristik der Gruppenantenne nicht optimateingesteitt werden.

Weiterhin besteht bei der oben beschriebenen, aus dem Stand der Technik bekannten Radarantenne ein Problem darin, daß der gesamte Radarsensor aufgrund der Anordnung der Rotmanlinse und der Gruppenantenne im rechten Winkel zueinander ein großes Volumen des Radarsensors einnimmt. Somit können nur ungenügend die Anforderungen an die Abmessungen eines Radarsensors erfüllt werden, um ihn bspw. im Bereich der Stoßstange eines Kraftfahrzeuges anzuordnen.

Ferner zeigen die Druckschriften WO 99 27 385 A und US-A-5 929 802 ebenfalls einen Radarsensor gemäß dem Oberbegriff des Anspruchs 1.

Der Erfindung liegt daher das technische Problem zugrunde, den aus dem Stand der Technik bekannten Radarsensor derart auszugestalten und weiterzubilden, dass die zuvor beschriebenen Nachteile des Standes der Technik behoben werden.

Diese Aufgabe wird durch einen Radarsensor mit den Merkmalen des Anspruchs 1 gelöst. Bevorzugte Ausgestaltungen der Erfindung sind Gegenstand der Unteransprüche.

Nach der vorliegenden Erfindung wird das zuvor genannte technische Problem gelöst durch einen Radarsensor mit einer Steuerschaltung, die als Sende- und/oder Empfangsmodul ausgebildet ist und mindestens einen MMIC (monolithic millimeterwave integrated circuit) aufweist, und mit einer Radarantenne, die über mindestens eine Zuleitung mit der Steuerschaltung verbunden ist und eine Rotmanlinse und eine Gruppenantenne aufweist, wobei die Steuerschaltung und die Radarantenne im wesentlichen parallel zueinander angeordnet sind, wird wobei die Rotmanlinse und die Gruppen antenne im wesentlichen parallel und beabstandet zueinander angeordnet sind.

Aufgrund der planaren Ausgestaltung des gesamten Radarsensors ergibt sich ein kompakter, ein geringes Volumen einnehmender Aufbau, so daß der erfindungsgemäße Radarsensor sich ohne Probleme in den Bereich der Stoßstange eines Kraftfahrzeuges integrieren läßt

Bei einer bevorzugten Ausgestaltung ist ein Leitungsträger vorgesehen, wobei Leitungen zur Übertragung von Hochfrequenzsignaten zwischen der Steuerschaltung und der mindestens einen Zuleitung der Radarantenne auf dem Leitungsträger angeordnet sind, wobei der Leitungsträger zwischen der Steuerschaltung und der Radarantenne angeordnet ist.

Durch den zuvor genannten Aufbau des Radarsensors kann die Signalübertragung zwischen den unterschiedlich dimensionierten Bausteinen, nämlich dem mindestens einem MMIC-Bauelement und der Radarantenne durch einen weiteren Baustein wirkungsvoll realisiert werden. Dazu können die auf dem zusätzlichen Leitungsträger angeordneten Leitungen vor einer Montage des Radarsensors hergestellt werden und somit können die eigentlichen Verbindungen zwischen dem mindestens einen MMIC-Bauelement und der Radarantenne in einfacher Weise nach der Montage einschließlich des Leitungsträgers hergestellt werden. Dabei ist gewährleistet, daß die auf dem Leitungsträger angeordneten Leitungen an ihren Anschlußstellen zu dem mindestens einen MMIC-Bauelement und zu der Radarantenne in geeigneter Weise dimensioniert sind.

Dabei ist bevorzugt, daß die Leitungen auf dem Leitungsträger im wesentlichen in einer Ebene parallel zu den Leiterbahnen der Steuerschaltung und der mindestens eine Zuleitung der Radarantenne verlaufen. Sind zusätzlich diese Leitungen im wesentlichen auf einer gleichen Höhe wie die Steuerschaltung und die Radarantenne angeordnet, so ergibt sich eine Anordnung der verschiedenen Leitungs elemente, die im wesentlichen in einer Ebene liegen. Die somit realisierten elektrischen bzw. elektromagnetischen Verbindungen zwischen den verschiedenen Bausteinen werden somit auf ein Minimum reduziert, so daß auftretende Verluste minimiert werden.

In weiter bevorzugter Weise sind die Leitungen als Mikrostreifenleitungen auf den Leitungsträger ausgebildet, die insbesondere für die Übertragung von hochfrequenten elektromagnetischen Signalen geeignet sind.

Bei einer weiteren Ausgestaltung der Erfindung ist ein Schaltungsträger vorgesehen, mit dem das mindestens eine MMIC-Bauelement der Steuerschaltung, der Leitungsträger und zumindest teilweise die Radarantenne, vorzugsweise mit einem Klebstoff, verbunden sind. Der Schaltungsträger kann daher auch als Multichipmodul bezeichnet werden. Somit bilden sämtliche Bauelemente eine Einheit, die über Schaltungsträger miteinander verbunden sind. Auf dem Schaltungsträger können zusätzlich auch Übertragungsleitungen zur Signalübertragung zwischen den Leitungen des Leiturigsträgers und den Zuleitungsanschlüssen der Radarantenne ausgebildet sein. Somit übemimmt der Schaltungsträger auch teilweise funktionale Aufgaben.

Als Verbindungsmöglichkeiten zwischen den Leitungen des Leitungsträgers und der mindestens einen Zuleitung der Radarantenne sind einerseits Drahtbondverbindungen und andererseits elektromagnetische Feldkopplungen möglich. Bei der Drahtbondverbindung ist dabei der sehr genaue Zuschnitt der Verbindungselemente zu beachten, da die elektrischen Eigenschaften der Drahtbondverbindung maßgeblich von dieser Genauigkeit abhängen. Daneben erlaubt eine Verbindung durch elektromagnetische Feldkopplung höhere Fertigungstoleranzen der einzelnen Elemente, erfordert jedoch einen höheren Aufwand an Schaltungsdesign.

Ein wichtiger Vorteil des zuvor beschriebenen Aufbaus besteht in der Modularität. Denn es können mit gleichen Radarantennen unterschiedliche Steuerschaltungen in Form vorgefertigter MMIC-Bauelemente für unterschiedliche Anwendungszwecke verwendet werden. Die Montage und Verbindung erfolgt auf dem Schaltungsträger.

Ferner wird in vorteilhafter Weise eine platzsparende Anordnung von Rotmanlinse und Gruppenantenne erreicht, so daß eine planare Ausführung des Radarsensors möglich wird, die einen einen Einsatz in einem Kraftfahrzeug erheblich vereinfacht. Somit ist es bspw. möglich, einen flächigen Radarsensor, in die Stoßstange eines Kraftfahrzeuges zu integrieren. Dieser schließt die Anordnung der Rotmanlinse und der Gruppenantenne auf einem Substrat nebeneinander mit ein.

Bei einer bevorzugten Ausgestaltung sind die Rotmanlinse und die Gruppenantenne auf zwei verschiedenen Substraten ausgebildet, wobei die beiden Substrate mit ihren der Rotmanlinse bzw. der Gruppenantenne abgewandten Seite miteinander verbunden sind und wobei zwischen den beiden Substraten eine gemeinsame Metallisierungsschicht angeordnet ist. Diese dient bevorzugt als gemeinsame Masse für die Rotmanlinse und die Gruppenantenne.

In weiter bevorzugter Weise sind in der Metallisierungsschicht Koppelschlitze ausgebildet, die die Antennenanschlüsse der Reihen von Einzelantennen der Gruppenantenne mit den Anschlußpunkten der Verzögerungsleitungen elektromagnetisch koppeln. Damit sind zwei wesentliche Vorteile verbunden. Zum einen braucht keine metallische Verbindung zwischen den Verzögerungsleitungen und den Reihen von Einzelantennen hergestellt werden. Zum anderen wird die Gruppenantenne durch das von der Rotmanlinse erzeugte elektromagnetische Feld nur an den dafür vorgesehenen Koppelschlitzen beeinflußt, im übrigen dient die Metallisierungsschicht einer Abschirmung zwischen der Rotmanlinse und der Gruppenantenne.

Weiterhin bevorzugt sind die Anschlußpunkte der Reihen von Einzelantennen im wesentlichen in der Mitte der Reihen angeordnet, wodurch eine symmetrische Amplitudenverteilung auf die Einzelantennen innerhalb einer Reihe von Einzelantennen erreicht wird. Dadurch wird die Richtcharakteristik der Radarantenne weiter verbessert.

Weitere Merkmale und Vorteile der vorliegenden Erfindung sind in der nachfolgenden Beschreibung von Ausführungsbeispielen näher erläutert. Dabei wird auf die beigefügte Zeichnung bezug genommen. In dieser zeigen

Fig. 1    ein Kraftfahrzeug mit einem erfindungsgemäßen Radarsensor, die Abstrahlcharakteristik darstellend,

Fig. 2    ein Blockschaltbild des erfindungsgemäßen Radarsensors,

Fig. 3    ein Beispiel eines Radarsensors im Querschnitt,

Fig.4    ein Ausführungsbeispiel eines erfindungsgemäßen Radarsensors im Querschnitt,

Fig. 5    eine Explosionsdarstellung zur Darstellung der Montage eines Schaltungsträgers,

Fig. 6    ein Beispiel einer Radarantenne in einer Draufsicht,

Fig. 7    eine Explosionsdarstellung eines Ausführugsbeispiels einer erfindungsgemäßen Radarantenne,

Fig. 8    eine Teilansicht der in Fig. 7 dargestellten Radarantenne im Querschnitt,

Fig. 9    eine Einzelantenne in einer Draufsicht,

Fig. 10    einen Ausschnitt aus einer Reihe von Einzelantennen in einer Draufsicht und

Fig. 11    zwei Reihen von Einzelantennen die Position der Koppelschlitze darstellend.

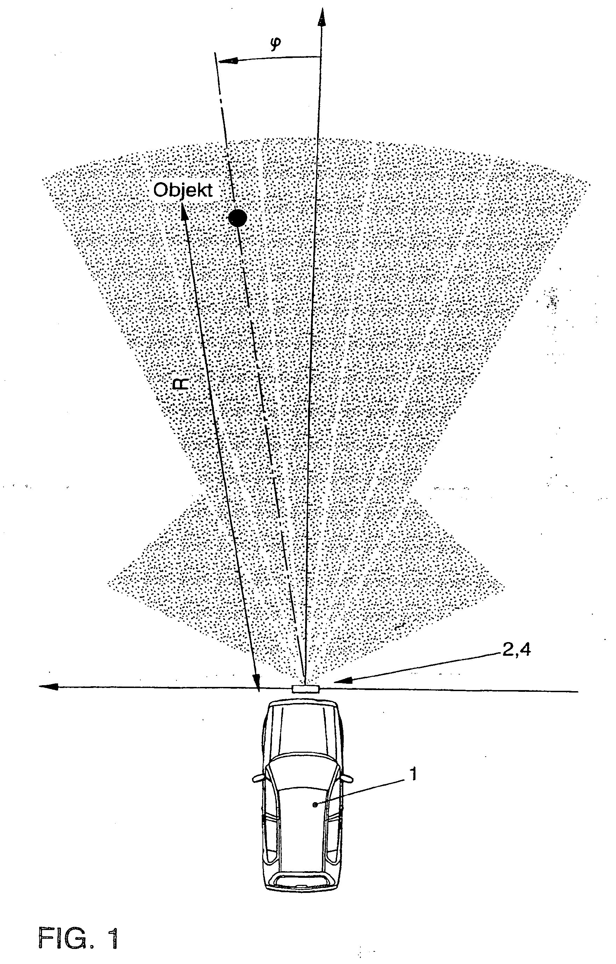

Fig. 1 zeigt ein Kraftfahrzeug 1, das an seinem vorderen Ende im Bereich der Stoßstange einen Radarsehsor 2 mit einer Radarantenne 4 aufweist, die eine azimutale Richtcharakteristik aufweist, die für verschiedene Winkelabschnitte φ eine separate Empfindlichkeit aufweist. Somit können Objekte winkelaufgelöst erfaßt werden, um die Umgebung des Kraftfahrzeuges 1 zu charakterisieren. Neben dem Winkel φ ist zudem die Bestimmung des Abstandes R und der relativen Geschwindigkeit v möglich, so daß vorausfahrende Fahrzeuge oder Gegenstände auf der Fahrbahn erkannt werden können, um somit das Fahrverhalten des Kraftfahrzeuges 1 zu beeinflussen.

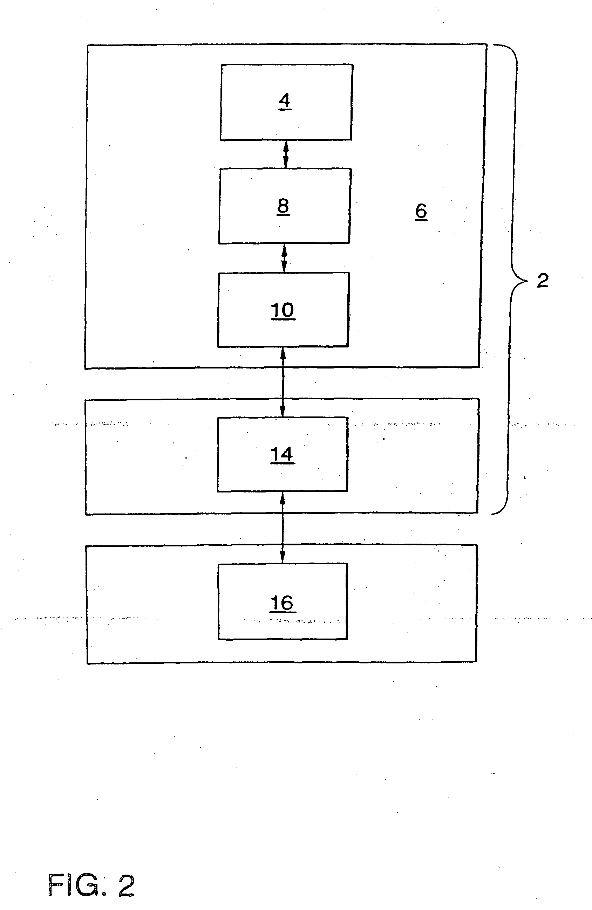

Fig. 2 zeigt mit einem Blockschaltbild den generellen Aufbau des gesamten Radarsensors sowie eines nachgeschalteten Auswertesystems. Im Frontend 6 sind die Radarantenne 4, eine Steuerschaltung 8 und ein Analog/Digital-Wandler 10 angeordnet. Die Steuerschaltung 8 ist dabei als Sende- und/oder Empfangsmodul ausgebildet und weist mindestens ein MMIC-Bauelement auf. Die Radarantenne 4 ist mit mindestens einer Zuleitung 12 mit der Steuerschaltung 8 verbunden.

Der Analog/Digital-Wandler 10 ist mit einem als elektronische Steuerungseinheit ausgebildeten ersten Steuergerät 14 verbunden, das wiederum mit einem zweiten Steuergerät verbunden ist, das bspw. als fahrzeuginterner Auswerterechner ausgebildet ist. In diesem findet die Auswertung der von der Radarantenne 4 empfangenen Signale statt, um in geeigneter Weise auf das Fahrverhalten des Kraftfahrzeuges 1 einzuwirken. Die elektronische Steuerungseinheit des ersten Steuergerätes 14 dagegen dient nicht nur zur Auswertung der von der Radarantenne 4 empfangenen Signale, sondern auch der Ansteuerung der Radarantenne 4 zum Aussenden von Radarsignalen. Daher ist bei dem in Fig. 2 dargestellten Ausführungsbeispiel die Radarantenne 4 monostatisch ausgebildet, dient also sowohl als Sendeantenne als auch als Empfangsantenne. Dagegen ist selbstverständlich auch eine bistatische Ausgestaltung des Radarsensors mit zwei verschiedenen Radarantennen 4 möglich, von denen eine als Sendeantenne und die andere als Empfangsantenne dient. Diese können unterschiedlich dimensioniert sein und jeweils an die Anforderungen als Sende- oder Empfangsantenne angepaßt sein. So reicht bspw. eine kleine Sendeantenne zum vollständigen Ausleuchten des zu überwachenden Bereiches aus, während die Empfangsantenne aufgrund der notwendigen Winkelauflösung eine größere Antennenfläche aufweist.

Eine zentrale Einheit des erfindungsgemäßen Radarsensors 2 ist die Steuerschaltung 8, die als Sende- und Empfangsmodul ausgebildet ist. Sie hat zum einen die Aufgabe, das frequenzmodulierte Radarsignal mit ausreichender Leistung der Radarantenne 4 zur Verfügung zu stellen. Zum anderen mischt die Steuerschaltung 8 das von der Radarantenne 4 empfangene Signal mit einem Lokaloszillatorsignal, so daß ein Signal im Basisband entsteht. Die Steuerschaltung 8 als Sende- und Empfangsmodul stellt somit die Schnittstelle zwischen der Signalverarbeitung und der Radarantenne 4 bzw. den Radarantennen 4 dar. Bei der erfindungsgemäßen Ausgestaltung des Radarsensors 2 sind sowohl die Radarantenne 4 als auch die Steuerschaltung 8 in planarer Technik aufgebaut. Wie bereits erwähnt, weist dazu die Steuerschaltung 8 MMIC-Bauelemente auf.

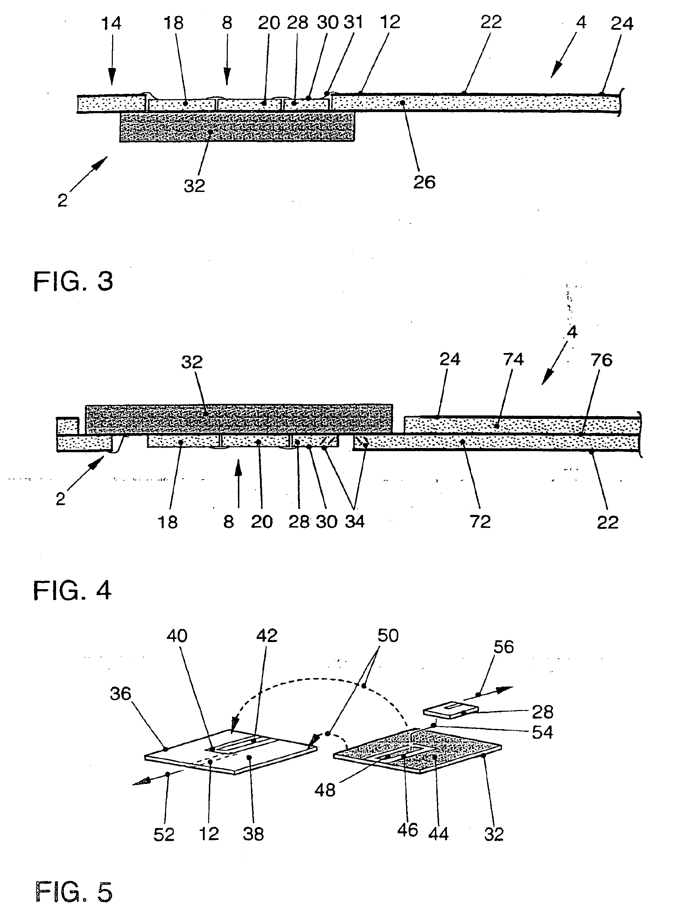

In Fig. 3 ist schematisch ein Beispiel eines Radarsensors dargestellt. Die Steuerschaltung 8 weist zwei MMIC-Bauelemente 18 und 20 auf, die unter anderem die Funktionen des Ozillators und eines I/O-Mischers realisieren. Weiterhin weist der Radarsensor eine planare Radarantenne 4 auf, die - wie unten näher erläutert wird - eine Rotmanlinse 22 und eine Gruppenantenne 24 aufweist, die auf einem Substrat 26 aufgebracht sind.

Weiterhin ist ein Leitungsträger 28 vorgesehen, auf dem Leitungen 30 ausgebildet sind, die zur Übertragung von Hochfrequenzsignalen zwischen den MMIC-Bauelementen 18 und 20 der Steuerschaltung 8 und den Zuleitungen 12 der Radarantenne 4 dienen. Dazu ist der Leitungsträger 28 zwischen der Steuerschaltung 8, also den MMIC-Bauelementen 18 und 20, und der Radarantenne 4 angeordnet.

Wie weiterhin Fig. 3 zeigt, verlaufen die auf dem Leitungsträger 28 ausgebildeten Leitungen 30 im wesentlichen in einer Ebene parallel zu den Leiterbahnen der Steuerschaltung 8 und den Zuleitungen 12 der Radarantenne 4. Dadurch wird in vorteilhafter Weise erreicht, daß die Verbindungen zwischen den Leitungen 30 und den Zuleitungen 12 der Radarantenne 4 bzw. den MMIC-Bauelementen 18 bzw. 20 sehr kurz ausgebildet werden können. Dadurch werden insbesondere die Verluste bei der Übertragung der Hochfrequenzsignale auf ein Minimum beschränkt.

Dieses gilt insbesondere dann, wenn die Leitungen 30 im wesentlichen auf einer gleichen Höhe wie die Leiterbahnen der Steuerschaltung 8 verlaufen, wie Fig. 3 zeigt. Da der Höhenunterschied zwischen dem Leitungsträger 28 und den Zuleitungen 12 zur Radarantenne 4 ebenfalls nur gering ausfällt, wird hier die vorteilhafte Wirkung kurzer Verbindungen ebenfalls realisiert. Vorliegend ist als Verbindung eine Drahtbondverbindung 31 gewählt worden.

Eine sehr gute Anpassung der Leitungen 30 zur Übertragung von Hochfrequenzsignalen besteht darin, daß diese als Mikrostreifenleitungen auf dem Leitungsträger 28 ausgebildet sind. Dazu ist der Leitungsträger 28 bspw. aus GaAs oder $Al_2O_3$ hergestellt.

Die Herstellung von Mikrostreifenleitungen auf GaAs-Basis erfolgt in einer Mehrzahl von Herstellungsschritten.

In einem ersten Schritt wird ein Wafer in Proben zerteilt, die für die Herstellung der Leitungsträger sinnvolle Größen haben. Dieses geschieht durch Ritzen einer Sollbruchstelle mit einem Diamanten und Brechen des Wafers über einer Kante. Anschließend wird das Waferstück auf eine erforderliche Dicke mittels eines naßchemischen Ätzpolierverfahrens gedünnt. Neben dem Ätzangriff der Ätzlösung, wie bspw. Brommethanollösung, wird die Dickenreduktion auch durch einen rein mechanischen Abrieb auf einem Poliertuch unterstützt. Danach erfolgt eine Reinigung der Waferstücke, um eine gute Haftung der Metallisierung auf dem GaAs sicherzustellen. Dazu werden sowohl das Eigenoxid als auch organische Verschmutzungen, von der Halbleiteroberfläche entfernt. Unmittelbar anschließend erfolgt die Metallisierung, um eine Neubildung von Eigenoxid auf der Probenoberflächen zu verhindern. Die Metallisierung besteht aus einem 10nm dicken Haftgrund aus Chrom, einer 100nm dick aufgedampften Goldschicht und schließlich 3$\mu$m galvanisch aufgebrachtem Gold. Da eine Mikrostreifenleitung ihr Massepotential auf der Substratunterseite hat, müssen beide Seiten des Waferstückes, das als Substrat dient, mit einer Metallisierung versehen werden. Vor der danach folgenden Lithographie wird die Probe, die aus dem Substrat und der Metallisierung besteht, mit einem Fotolack auf einem Glasträger geklebt. Mit diesem Schritt wird zum einen die Handhabung des empfindlichen GaAs erleichtert und zum anderen wird während des Ätzens die Metallisierung auf der Probenrückseite geschützt. Nach dem Ätzschritt wird der Fotolack in Azeton aufgelöst und die Probe somit wieder von ihrem Träger gelöst. Um sicherzustellen, daß keine Lackreste auf der Probe zurückbleiben, werden diese einem Lackveraschungsschritt unterzogen, so daß vor allem auf den Leiterbahnen keine Lackreste zurückbleiben, die zu einer verschlechterten Haftung eines Bonddrahtes führen. Schließlich werden die Proben hochgenau zu den GaAs-Leitungsträgem zugeschnitten.

Wie Fig. 3 weiterhin zeigt, ist ein Schaltungsträger 32 vorgesehen, der eine stabile Grundlage für die Montage der empfindlichen MMIC-Bauelemente 18 und 20 sowie für den Leitungsträger 28 darstellt. Dazu sind diese mit dem Schaltungsträger 32 mit einem Klebstoff verbunden. Zusätzlich ist die Radarantenne 4 teilweise ebenfalls mit dem Schaltungsträger 32 verbunden. Um eine stabile Grundlage für die verschiedenen Elemente zu bieten, ist das Material des Schaltungsträgers 32 an das thermische Ausdehnungsverhalten der Substrate der MMIC-Bauelemente 18 und 20, des Leitungsträgers 28 und der Radarantenne 4 angepaßt, da insbesondere beim Einsatz mit einem Kraftfahrzeug große Temperaturunterschiede auftreten. Dazu ist im vorliegenden Ausführungsbeispiel $Al_2O_3$ ausgewählt worden. Zudem sind direkt auf dem Substrat des Schaltungsträgers 32 Leitungen zur Spannungsversorgung und zur Verbindung mit dem ersten Steuergerät 14 ausgebildet.

Wie im Zusammenhang mit dem in den Fig. 4 und 5 dargestellten Ausführungsbeispiel näher erläutert wird, weist der Schaltungsträger 32 darüber hinaus auch eine weitere Funktion auf.

Wie in Fig. 4 dargestellt ist, sind bei diesem Ausführungsbeispiel die MMIC-Bauelemente 18 und 20, der Leitungsträger 28 und teilweise die Radarantenne 4 mit dem Schaltungsträger 32 verbunden. Im Gegensatz zu dem in Fig. 3 dargestellten Beispiel ist jedoch der Leitungsträger 28 nicht mittels einer Drahtbondverbindung 31, sondern mit Hilfe einer elektromagnetischen Feldkopplung 34 verbunden, wie anhand der Fig. 5 näher erläutert wird.

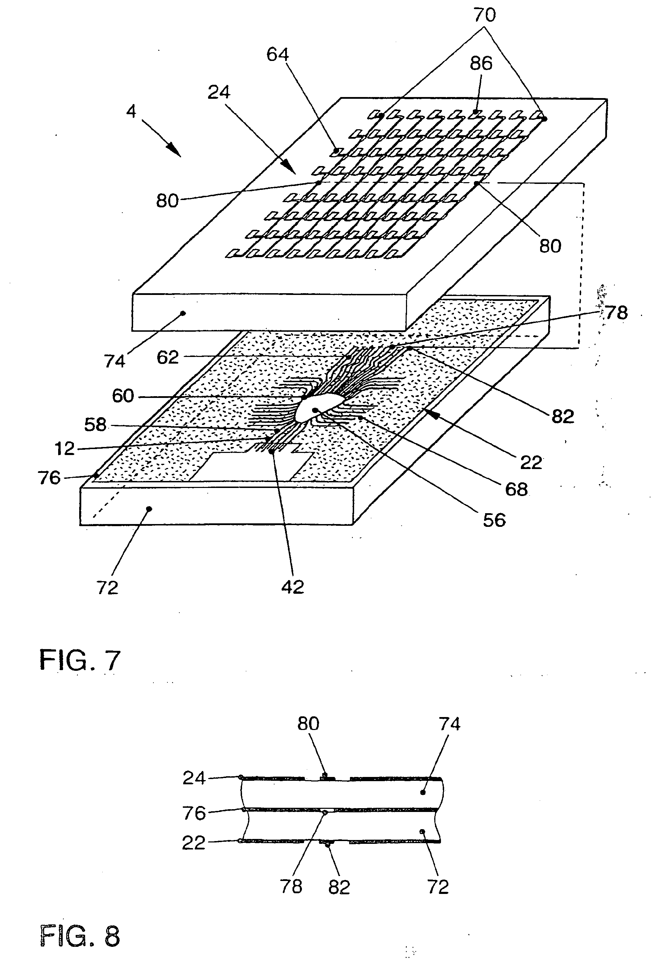

Das Substrat 36, auf dem die Radarantenne 4 zumindest teilweise ausgebildet ist, nämlich in Form der Rotmanlinse 22, weist auf der in Fig. 5 oben dargestellten Seite eine Massemetallisierung auf, die eine Aussparung 40 und darin eine Koplanarleitung 42 aufweist. Auf der in Fig. 5 oben dargestellten Oberfläche des Schaltungsträgers 32 sind symmetrisch zu der Ausgestaltung der Oberfläche des Substrates 36 eine Massemetallisierung 44, eine Aussparung 46 und eine Koplanarleitung 48 ausgebildet. Wie mit dem Pfeilen 50 dargestellt ist, wird der Schaltungsträger 32 mit der in Fig. 5 nach oben dargestellten Oberfläche umgedreht auf dem Substrat 36 zur Anlage gebracht, wodurch die beiden Koplanarleitungen 42 und 48 zumindest teilweise überlappend aneinander anliegen. Somit entsteht ein elektrischer Kontakt zwischen beiden Koplanarleitungen 42 und 48. Die Koplanarleitungen 42 sind auch in Fig. 7 in ihrer Anordnung relativ zu den Zuleitungen 12 dargestellt.

Auf der Unterseite des Substrates 36 ist in Fig. 5 mit gestrichelten Linien eine Zuleitung 12 dargestellt, die als Mikrostreifenleitung ausgebildet ist. Der Pfeil 52 deutet dabei in Richtung der Radarantenne 4, insbesondere der Rotmanlinse 22.

Auf der anderen Seite wird der Leitungsträger 28, der eine Leitung 30 in Form einer Mikrostreifenleitung aufweist mit der der Leitung 30 abgewandten Oberfläche auf dem Schaltungsträger 32 befestigt, wie mit dem Pfeil 54 dargestellt ist. Der Pfeil 56 weist dagegen in Richtung der Steuerschaltung 8, mit der die Leitung 30 verbunden ist.

Sowohl die Zuleitung 12 als auch die Leitung 30 sind nicht mit den Koplanarleitungen 42 bzw. 48 elektrisch leitend verbunden, sondern sie sind jeweils durch die Substrate 36 bzw. 32 von den Koplanarleitungen 42 bzw. 48 beabstandet angeordnet. Somit wird die Leitung 30 mit der Zuleitung 12 über eine Serienschaltung von zwei Mikrostreifen-Koplanar-Übergängen elektromagnetisch miteinander gekoppelt. Der erste Übergang verbindet dabei den Leitungsträger 28 mit dem Schaltungsträger 32 und der zweite Übergang gewährleistet die Ankopplung der Rotmanlinse 22 mit dem Schaltungsträger 32. Dabei erfolgt die Verbindung der beiden Koplanarleitungen 42 und 48 galvanisch durch eine Flip-Chip-Montage. Dadurch wird nicht nur eine vereinfachte Montage erreicht, sondern es treten auch geringere elektrische Verluste gegenüber einer Drahtbondverbindung auf. Nicht zuletzt wird auch die oben beschriebene modulare Bauweise des Radarsensors durch die Flip-Chip-Montage vereinfacht, da ohne größere Anpassungsprobleme unterschiedliche MMIC-Bauelemente verschiedener Steuerschaltungen mit dem Schaltungsträger 32 und der Radarantenne 4 verbunden werden können. Zudem ist die zuvor beschriebene Bauweise platzsparend.

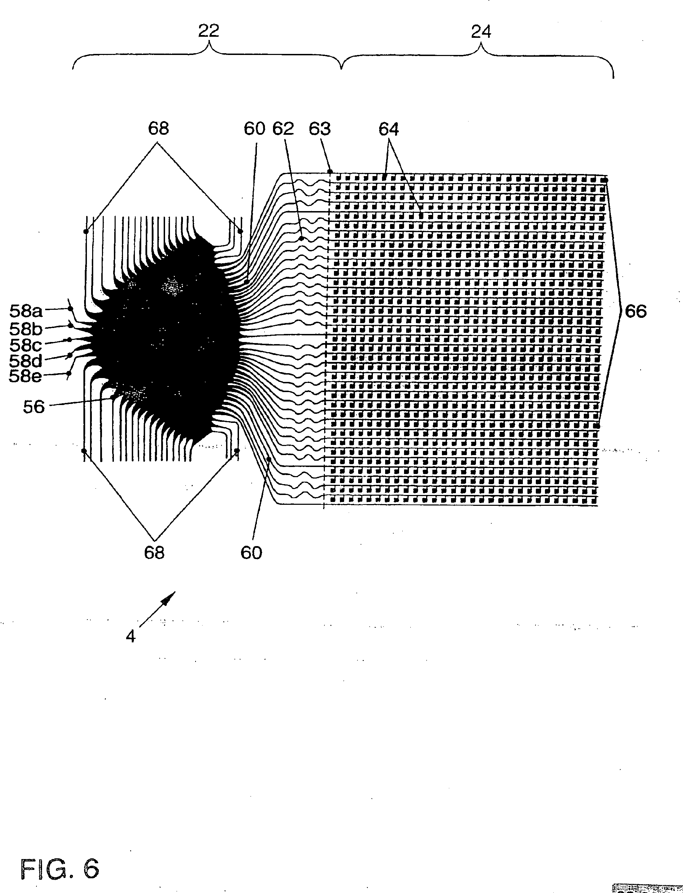

In Fig. 6 ist ein Beispiel einer Radarantenne 4, die in dem oben beschriebenen Ausführungsbeispielen des Radarsensors 2 Anwendung finden kann, dargestellt. Die Radarantenne 4 weist eine Rotmanlinse 22 auf, die eine linsenförmige Parallelplattenleitung 56, fünf Zuleitungsanschlüsse 58a bis 58e, eine Mehrzahl von Ankopplungsanschlüssen 60 und Verzögerungsleitungen 62 aufweist. Weiterhin weist die Radarantenne 4 eine Gruppenantenne 24 auf, die eine Mehrzahl von Einzel-antennen 64 aufweist, die zu einer Mehrzahl von Reihen 66 in Serie geschaltet sind. Für jede Reihe 66 von Einzelantennen 64 ist eine Verzögerungsleitung 62 vorgesehen, die das von der Parallelplattenleitung 56 an den jeweils zugeordneten Ankopplungsanschluß 60 abgegebene hochfrequente Signal auf die Reihe 66 von Einzelantennen überträgt. Alle anderen Anschlüsse 68 dienen dem elektrischen Abschluß der Parallelplattenleitung 56 und sind mit einem Absorbermaterial bspw. in Form einer Folie (nicht dargestellt) abgedeckt. Um Vielfachreflexionen innerhalb des Gebietes der Parallelplattenleitung 56 zu vermeiden, sind sämtliche Anschlüsse, also die Zuleitungsanschlüsse 58a bis 58e die Ankopplungsanschlüsse 60 sowie die Abschlußanschlüsse 68. mit Klopfenstein-Tapern impendanzangepaßt in Mikrostreifenleitungen überführt. Dabei werden die in Fig. 6 links dargestellten Zuleitungsanschlüsse 58a bis 58e der elektronischen Steuerschaltung 8 und die rechts dargestellten Ankopptungsanschlüsse 60 der Gruppenantenne 24 zugeführt.

Die Form der Parallelplattenleitung 56 und der Verzögerungsleitungen 62 ist so ausgebildet, daß bei einer geeigneten Anregung in der Fokusebene, die in Fig. 6 im Bereich der Zuleitungsanschlüsse 58a bis 58e liegt, eine gezielte Phasenbelegung an den in Fig. 6 dargestellten Antennenanschlüssen 63 realisiert wird. Somit liegt bei einem hochfrequenten Signal schmaler Bandbreite und bei einer Einspeisung über den mittleren Zuleitungsanschluß 58c an den Ankopplungsanschlüssen 63 ein gleichphasiges hochfrequentes Signal an. Wird dagegen das hochfrequente Signal an einem der beiden äußeren Zuleitungsanschlüsse 58a oder 58e zugeführt, so liegt ein Signal an den Ankopplungsanschlüssen 63 an, das eine feste Phasenbeziehung vorgibt, jedoch eine Phasenverschiebung zwischen den einzelnen Ankopplungsanschlüssen 60 aufweist. Dabei sind die Parallelplattenleitung 56 und die Verzögerungsleitungen 62 derart ausgebildet, daß die Phasenbeziehung linear von den oberen bis zu den unteren in Fig. 6 dargestellten Ankopplungsanschlüssen 63 verläuft. Die Parallelplattenleitung 56 ist dabei so ausgebildet, daß für drei Brennpunkte der Linse ein exakt linearer Phasenverlauf erreicht wird. Bspw. stellen die beiden äußeren Zuleitungsanschlüsse 58a und 58e sowie der mittlere Zuleitungsanschluß 58c die drei Brennpunkte der Rotmanlinse dar.

Die singallaufzeiten, die zwischen den Zuleitungsanschlüssen (58) und den Antennenanschlüssen (63) auftreten, sind für verschiedene Verzögerungsleitungen (62) für eine vorgegebene Frequenz des hochfrequenten Signals um im wesentlichen ganzzahlige Vielfache der Perioden des Signals verändert, um eine Amplitudenverteilung der an den Antennenanschlüssen (63) anliegenden Signale vorzugeben. In bevorzugter Weise sind dabei die Signallaufzeiten für außen liegende Verzögerungsleitungen (62) gegenüber innen liegenden Verzögerungsleitungen (62) verlängert.

Dadurch wird einerseits gewährleistet, daß die an den Ankopplungsanschlüssen 63 anliegenden hochfrequenten Signale mit ihrer vorgegebenen Phasenbeziehung den Reihen 66 der Einzelantennen 64 zugeführt werden. Wird bspw der mittlere Zuleitungsanschluß 58c mit dem hochfrequenten Signal beaufschlagt, so entstehen an den Ankopplungsanschlüssen 63 Hochfrequenzsignale, deren Phasenverschiebung im wesentlichen gleich null ist

Da jedoch andererseits die äußerem Verzögerungsleitungen 62 gezielt eine größere Länge als die mittleren Verzögerungsleitungen 62 aufweisen, werden die Hochfrequenzsignale außen stärker gedämpft, so daß sich eine Amplitudenverteilung innerhalb der Gruppenantenne 24 ausbildet, die in der Mitte höhere und außen eine geringere Amplitude aufweist. Dadurch läßt sich vorteilhaft die Richtcharakteristik der Gruppenantenne 24 beeinflussen.

Bei dem in Fig. 6 dargestellten Beispiel werden die unterschiedlichen Signallaufzeiten entlang der Verzögerungsleitungen 62 durch unterschiedliche geometrische Längen vorgegeben. Dieses ist deutlich an den mehr oder weniger kurvenförmig verlaufenden Konturen der Verzögerungsleitungen 62 zu erkennen. Ebenso ist es möglich, die Signallaufzeiten durch unterschiedliche Dielektrizitätskonstanten der für die Verzögerungsleitungen 62 verwendeten Substrate einzustellen, da sich die elektromagnetischen Signale entlang der Verzögerungsleitungen ausbreiten und von der Dielektrizitätskonstanten des Substrates in ihrer Laufzeit beeinflußt werden.

Durch die phasengenaue Ansteuerung der Einzelantennen 64 der Gruppenantenne 24 ist ein sehr genaues Einstellen der Richtcharakteristik der Radarantenne 4 möglich. Die Richtcharakteristik der Antenne weist jeweils eine Hauptkeule auf, während zu beiden azimutalen Richtungen Nebenkeulen auftreten, deren Intensität erheblich geringer als die der Hauptkeule ist. Die azimutale Ausrichtung der Hauptkeule läßt sich durch eine unterschiedliche Ansteuerung der Rotmanlinse über die unterschiedlichen Zuleitungsansschlüsse 58a bis 58e steuern. Denn je nach Phasenbeziehung zwischen den verschiedenen Einzelantennen 64 wird die Richtung der Hauptkeule verschoben. Dadurch wird eine Winkelauflösung der Radarantenne 4 ohne ein mechanisches Verstellen allein auf elektronischem Weg erreicht.

Die Richtcharakteristik der Gruppenantenne 24 wird auch dadurch beeinflußt, daß die in Fig. 6 oben und unten angeordneten Reihen 66 der Einzelantennen 64 mit einem Signal beaufschlagt werden, dessen Amplitude geringer ist, als es für die in Fig. 6 in der Mitte dargestellten Reihen 66 der Fall ist, wie bereits oben erläutert worden ist. Dadurch wird die Erzeugung elektromagnetischer Strahlung in der Mitte der flächigen Gruppenantenne 24 konzentriert. Eine Ansteuerung mit unterschiedlicher Amplitude wird dabei dadurch erreicht, daß die Verzögerungsleitungen für die äußeren Reihen 66 erheblich länger als für die mittleren Reihen 66 sind, wodurch das hochfrequente Signal bis zu seinem Eintreten in die äußeren Reihen 66 stärker abgeschwächt wird, als es für die mittleren Verzögerungsleitungen 62 der Fall ist. Allein aufgrund von Dämpfungseffekten wird somit eine geeignete Amplitudenverteilung der hochfrequenten Signale innerhalb der Gruppenantenne 24 erreicht.

Wie in Fig. 6 dargestellt ist, sind die Verzögerungsleitungen 62 mit jeweils einem der beiden Enden der Reihen 66 von Einzelantennen 64 verbunden. Dabei sind die Rotmanlinse 22 und die Gruppenantenne 24 auf einem Substrat ausgebildet, was im wesentlichen der in Fig. 3 dargestellten Ausführungsform entspricht. Somit sind die Rotmanlinse 22 und die Gruppenantenne 24 im wesentlichen in einer Ebene angeordnet, wodurch eine planare Ausbildung der gesamten Radarantenne erreicht wird.

In Fig. 7 ist ein Ausführungsbeispiel eines erfindungsgemäßen Radarsensors einer Radarantenne 4 in einer Explosionsdarstellung gezeigt. Auch hier weist die Rotmanlinse 22 die zuvor beschriebene Parallelplattenleitung 56, Zuleitungsanschlüsse 58, Ankopplungsanschlüsse 60 und Verzögerungsleitungen 62 auf. Darüber hinaus weist die Gruppenantenne 24 Einzelantennen 64 auf, die in Reihen 70 in Serie geschaltet sind. Dabei unterscheiden sich die Reihen 70 von Einzelantennen von denen des ersten Ausführungsbeispieles dadurch, daß, wie in folgenden detailliert beschrieben wird, die Einkopplung der elektromagnetischen Signale im wesentlichen in der Mitte der Reihen 70 erfolgt Erfindungsgemäß sind nun die Rotmanlinse 22 und die Gruppenantenne 24 parallel und beabstandet zueinander angeordnet, im Gegensatz zur Ausbildung in einer Ebene beim ersten Ausführungsbeispiel sind daher Rotmanlinse 22 und Gruppenantenne 24 zumindest teilweise sich überlappend übereinander angeordnet Dazu ist die Rotmanlinse 22 auf einem ersten Substrat 72 und die Gruppenantenne auf einem zweiten Substrat 74 ausgebildet. Die beiden Substrate 72 und 74 sind mit ihren der Rotmanlinse 22 bzw. der Gruppenantenne 24 abgewandten Seiten miteinander mittels einer gemeinsamen Metallisierungsschicht 76 miteinander verbunden. Dabei dient die Metallisierungsschicht 76 als gemeinsames Massepotential. Der zuvor beschriebenen zweischichtige Aufbau der Radarantenne 4 ist ebenfalls in Fig. 4 sowie in Fig. 8 dargestellt.

Die Kopplung zwischen der Rotmanlinse 22 und der Gruppenantenne 24 erfolgt mittels einer elektromagnetischen Feldkopplung, wie sie bereits oben für die verschiedenen Bauelemente des Radarsensors 2 beschrieben worden ist. Dazu sind Koppelschlitze 78 in der Metallisierungsschicht 76 ausgebildet, die die Anschlußpunkte 80 der Reihen 70 der Einzelantennen 64 mit den Anschlußpunkten 82 der Verzögerungsleitungen 62 elektromagnetisch koppeln.

Somit wird das elektromagnetische Feld ausgehend von den Anschlußpunkten 82 durch das Substrat 72, durch die Koppelschlitze 78 hindurch und durch das Substrat 74 auf die Anschlußpunkte 80 der Gruppenantenne 24 übertragen. Da darüber hinaus die Metallisierungsschicht 76 im wesentlichen vollflächig ausgebildet ist, wird in vorteilhafter Weise eine gute Abschirmung der Rotmanlinse 22 von der Gruppenantennne 24 erreicht.

Die Positionierung und Ausgestaltung eines Koppelschlitzes 78 und zweier Anschlußpunkte 80 und 82 ist auch in Fig. 8 dargestellt. Da der Koppelschlitz 78 nur einen beschränkten räumlichen Bereich zur elektromagnetischen Kopplung der beiden Anschlußpunkte 80 und 82 vorgibt, findet zum einen eine genaue definierte Anregung der Reihen 70 statt und zum anderen ist eine gute Abschirmung in den Bereichen außerhalb der Koppelschlitze 78 gewährleistet.

Zuvor ist die Ansteuerung der Gruppenantenne 24 als Sendeantenne beschrieben worden, wobei die elektromagnetischen Signale von der Rotmanlinse 22 auf die Gruppenantenne 24 erfolgt. Bei einer Verwendung der Gruppenantenne 24 als Empfangsantenne erfolgt die Signalausbreitung auf dem umgekehrten Weg.

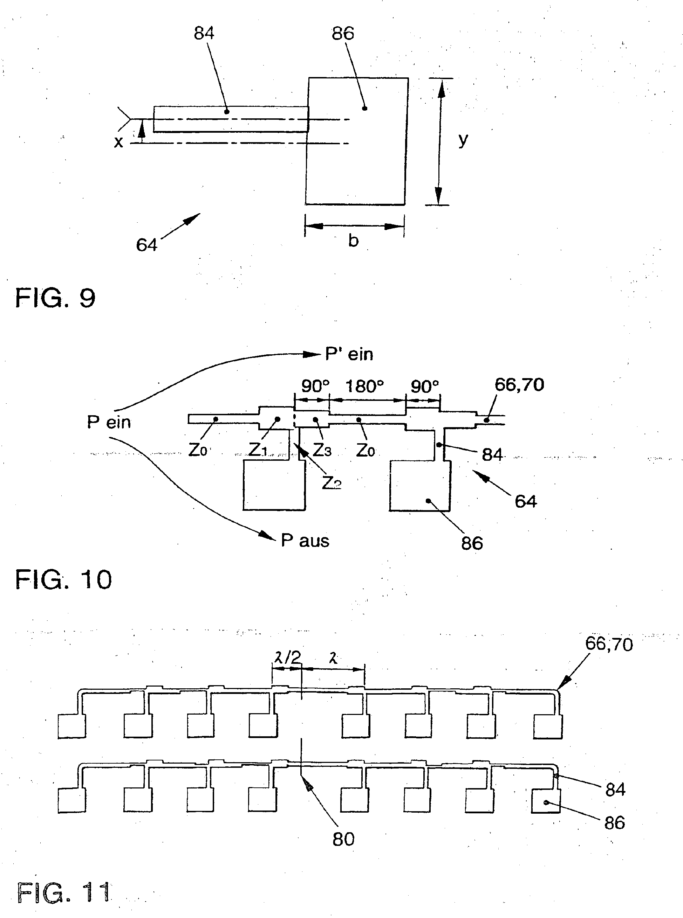

In den Fig. 9 bis 11 ist eine genauere Ausgestaltung der Einzelantennen sowie der Reihen 70 bzw. 66 von Einzelantennen 64 im Detail dargestellt.

Fig. 9 zeigt eine Einzelantenne 64 mit einer Zuleitung 84, die als Mikrostreifenleitung ausgebildet ist, und mit einer Strahlungsfläche 86; die auch Patch genannt wird. Die Länge der Strahlungsfläche 86, in Fig. 9 mit y bezeichnet, ist durch die Frequenz des hochfrequenten Signals vorgegeben und entspricht im wesentlichen der halben Wellenlänge der Strahlung im Substrat. Dagegen sind die Breite (b) und die relative Lage des Einspeisepunktes (x) in Grenzen wählbar, wobei beide Parameter aufeinander abgestimmt sind, um eine gute Eingangsanpassung zu gewährleisten. Die mit y gekennzeichnete Kante der Strahlungsfläche 86 wird auch als nicht strahlende Seite und die beiden mit b gekennzeichneten Kanten als strahlenden Seiten der Strahlungsfläche 86 bezeichnet. Die beiden Parameter Breite (b) und Länge (y) sind in Grenzen veränderbar, wodurch die Größe der aus der Reihe 70 bzw. 66 für die jeweilige Einzelantenne 64 ausgekoppelten Leistung und darüber die Amplitudenverteilung innerhalb der Reihe 70 bzw. 66 einstellbar ist.

Zur Ansteuerung einer Reihe 70 (bzw. 66) von Einzelantennen 64 wird ein Speisenetzwerk in Form einer Dreitor-Serienschaltung aufgebaut, wie sie in Fig. 10 dargestellt ist. Ein Dreitor ist aus zwei $\lambda/4$-Transformatoren und einem Einzelantennen-Abzweig zusammengesetzt. Unter der Voraussetzung, daß alle Einzelantennen 64 gleichphasig arbeiten, müssen die Auskoppelpunkte demnach elektrisch 360° voneinander entfernt sein. Das Verbindungstück zwischen zwei Dreitoren muß deshalb eine elektrischen Phasendrehung von 180° realisieren. Die einzelnen Dreitore sind weiterhin so ausgelegt, daß je nach gewünschter Amplitudenbelegung der Einzelantennen 64 entlang der Reihe 70 ein definierter Anteil der Leistung $P_{ein}$ im Speisestrang in die Zuleitung der Einzelantenne 64 ausgekoppelt wird.

Für die einzelnen Impedanzen gilt bei festgelegtem auszukoppelnden Anteil $\alpha$ und freigewähltem Impedanzniveau $Z_0$ des Speisestranges:

$$Z_1 = \sqrt{\alpha\, Z_0 Z_2}\,,$$

$$Z_3 = \sqrt{\alpha(1-\alpha)^{-1}\, Z_0 Z_2}\,.$$

Aus den Formeln wird klar, daß neben dem Impedanzniveau $Z_0$ auch der Anteil der ausgekoppelten Leistung frei gewählt werden kann. $Z_2$ ist das Impedanzniveau der Zuleitung 84 der Einzelantenne 64, während $Z_0$ als Impedanzniveau des Speisestranges bezeichnet werden soll.

Neben der in Fig. 10 dargestellten Anordnung abgezweigter Einzelantennen können diese auch innerhalb des Stranges in Reihe angeordnet bzw. aufgefädelt sein. Die Amplitude der jeweils ausgekoppelten Signale wird dann über die Breite der Strahlungsflächen gesteuert.

In Fig. 11 ist die Positionierung der Anschlußpunkte 80 entlang zweier Reihen 70 dargestellt. Die Anschlußpunkte 80 sind im wesentlichen in der Mitte der Reihen 70 angeordnet, wobei, wie Fig. 11 zeigt, eine Unterteilung in $\lambda/2$ und $\lambda$ vorgenommen wird, um bei sich entlang der Reihen 70 in zwei verschiedenen Richtungen ausbreitenden elektromagnetischen Wellen eine gleiche Phase der links und rechts vom Anschlußpunkt 80 liegenden Einzelantennen 64 zu gewährleisten.

Bei den zuvor beschriebenen Ausführungsbeispielen der Radarantenne 4 sind die Substrate der Rotmanlinse 22 und der Gruppenantenne 24 aus einem keramikgefüllten Komposit aus Polytetrafluoroethylene (PTFE) hergestellt. Dadurch wird eine flexible Ausgestaltung der Form der Radarantenne 4 und nicht zuletzt darüber auch des Radarsensors 2 ermöglicht.

Weisen darüber hinaus die Substrate 72 und 74 unterschiedliche Dielektrizitätskonstanten auf, so kann die Größe der Rotmanlinse 22 bei einer Verwendung einer hohen Dielektrizitätkonstante unabhängig von der durch die äußere Form der Gruppenantenne 24 vorgegebenen Abmessungen hinaus verkleinert werden.

Schließlich sei hervorgehoben, daß bei dem in Fig. 7 dargestellten Ausführungsbeispiel des Radarsensors die Führung der Verzögerungsleitungen im Rahmen des Designs gewählt werden kann. In bevorzugter Weise sind diese Verzögerungsleitungen 62 jedoch so gewählt, wie es in Bezug auf das Beispiel gemäß Fig. 6 beschrieben wurde. Eine Anpassung der Signallaufzeiten stellt somit eine zusätzliche Option für die Radarantenne 4 gemäß dem Ausführungsbeispiel dar.

**Patentansprüche**

**1.** Radarsensor insbesondere für ein Überwachen der Umgebung eines Kraftfahrzeuges,

    - mit einer Steuerschaltung (8), die als Sende- und/oder Empfangsmodul ausgebildet ist und mindestens ein MMIC-Bauelement (monolithic millimeterwave integrated circuit) (18,20) aufweist, und
    - mit mindestens einer Radarantenne (4), die über mindestens eine Zuleitung (58) mit der Steuerschaltung (8) verbunden ist und eine Rotmanlinse (22) und eine Gruppenantenne (24) aufweist,

    **dadurch gekennzeichnet,**

    - **daß** die Steuerschaltung (8) und die Radarantenne (4) im wesentlichen parallel zueinander angeordnet sind, und

- **daß** die Rotmanlinse (22) und die Gruppenantenne (24) im wesentlichen parallel und beabstandet zueinander angeordnet sind.

2. Radarsensor nach Anspruch 1, **dadurch gekennzeichnet, daß** die Steuerschaltung (8) und die Radarantenne (4) im wesentlichen in einer Ebene angeordnet sind.

3. Radarsensor nach Anspruch 1 oder 2, **dadurch gekennzeichnet,**

   - **daß** ein Leitungstrager (28) vorgesehen ist und
   - **daß** Leitungen (30) zur Übertragung von Hochfrequenzsignalen zwischen der Steuerschaltung (8) und der mindestens einen Zuleitung (58) der Radarantenne (4) auf dem Leitungsträger (28) angeordnet sind,
   - wobei der Leitungsträger (28) zwischen der Steuerschaltung (8) und der Radarantenne (4) angeordnet ist.

4. Radarsensor nach Anspruch 3, **dadurch gekennzeichnet daß** die Leitungen (30) im wesentlichen in einer Ebene parallel zu den Leiterbahnen der Steuerschaltung (8) und der mindestens einen Zuteilung (58) verlaufen.

5. Radarsensor nach Anspruch 3 oder 4, **dadurch gekennzeichnet, daß** die Leitungen (30) im wesentlichen auf einer gleichen Höhe wie die Leiterbahnen der Steuerschaltung (8) und die mindestens eine Zuleitung (58) verlaufen.

6. Radarsensor nach einem der Ansprüche 3 bis 5, **dadurch gekennzeichnet, daß** die Leitungen (30) als Mikrostreifenleitungen auf dem Leitungsträger (28) ausgebildet sind.

7. Radarsensor nach einem der Ansprüche 3 bis 6, **dadurch gekennzeichnet, daß** der Leitungsträger (28) aus GaAs hergestellt ist.

8. Radarsensor nach einem der Ansprüche 3 bis 7, **dadurch gekennzeichnet, daß** ein Schaltungsträger (32) vorgesehen ist, mit dem das mindestens eine MMIC-Bauelement (18,20) der Steuerschaltung (8), der Leitungsträger (28) und zumindest teilweise die Radarantenne (4), vorzugsweise mit einem Klebstoff, verbunden sind.

9. Radarsensor nach einem der Ansprüche 3 bis 8, **dadurch gekennzeichnet, daß** das Material des Schaltungsträgers (32) an das thermische Ausdehnungsverhalten der Substrate des mindestens einen MMIC-Bauelementes (18,20) der Steuerschaltung (8), des Leitungsträgers (28) und der Radarantenne (4) angepaßt ist.

10. Radarsensor nach Anspruch 8 oder 9, **dadurch gekennzeichnet, daß** der Schaltungsträger (32) aus $Al_2O_3$ hergestellt ist.

11. Radarsensor nach einem der Ansprüche 8 bis 10, **dadurch gekennzeichnet, daß** auf dem Substrat des Schaltungsträgers (32) Leitungen (48) zur Signalübertragung zwischen den Leitungen (30) des Leitungsträgers (28) und den Zuleitungsanschlüssen (58) der Radarantenne (4) ausgebildet sind.

12. Radarsensor nach einem der Ansprüche 3 bis 11, **dadurch gekennzeichnet, daß** Drahtbondverbindungen (31) zwischen den Leitungen (30) und der mindestens einen Zuleitung (58) der Radarantenne (4) ausgebildet sind.

13. Radarsensor nach einem der Ansprüche 3 bis 11, **dadurch gekennzeichnet, daß** elektromagnetische Feldkopplungen (34) zwischen den Leitungen (30) und der mindestens einen Zuleitung (58) der Radarantenne (4) ausgebildet sind.

14. Radarsensor nach einem der Ansprüche 1 bis 13, **dadurch gekennzeichnet, dass** die Rotmanlinse (22) eine linsenförmige Parallelplattenleitung (56), mindestens zwei Zuleitungsanschlüsse (58), eine Mehrzahl von Ankopplungsanschlüssen (60) und Verzögerungsleitungen (62) aufweist, und die Gruppenantenne (24) eine Mehrzahl von Einzelantennen (64) aufweist, die zu mindestens zwei Reihen (66) jeweils in Serie geschaltet sind.

15. Radarsensor nach Anspruch 14, **dadurch gekennzeichnet,**

   - **daß** die Rotmanlinse (22) auf einem ersten Substrat (72) und die Gruppenantenne (24) auf einem zweiten Substrat (74) ausgebildet sind,
   - **daß** die beiden Substrate (72,74) mit ihren der Rotmanünse (22) bzw. der Gruppenantenne (24) abgewandten Seiten miteinander verbunden sind und
- **daß** zwischen den beiden Substraten (72,74) eine gemeinsame Metallisierungsschicht (76) angeordnet ist.

16. Radarsensor nach Anspruch 15, **dadurch gekennzeichnet, daß** die Metalfisierungsschicht (76) als gemeinsames Massepotential dient.

17. Radarsensor nach einem der Ansprüche 15 oder 16, **dadurch gekennzeichnet, daß** Koppelschlitze (78) in der Metallisierungsschicht (76) ausgebildet sind, die die Anschlußpunkte (80) der Reihen (70) von Einzelantennen (64) mit den Anschlußpunkten (82) der Verzögerungsleitungen (62) elektromagnetisch koppeln.

18. Radarsensor nach Anspruch 17, **dadurch gekennzeichnet, daß** die Anschlußpunkte (80) der Reihen (70) von Einzelantennen (64) im wesentlichen in der Mitte der Reihen (70) angeordnet sind.

19. Radarsensor nach einem der Ansprüche 14 bis 18, **dadurch gekennzeichnet, daß** die Substrate (72,74) für die Rotmanlinse (22) und die Gruppenantenne (24) aus einem keramikgefüllten Komposit aus Polytetrafluoroethylene (PTFE) hergestellt sind.

20. Radarsensor nach einem der Ansprüche 14 bis 19, **dadurch gekennzeichnet, daß** die Substrate für die Rotmanlinse (22) und für die Gruppenantenne (24) unterschiedliche Dielektrizitätskonstanten aufweisen.

**Claims**

1. Radar sensor, in particular for monitoring the area surrounding a motor vehicle,

   - having a control circuit (8), which is in the form of a transmitting and/or receiving module and has at least one MMIC component (monolithic millimetrewave integrated circuit) (18, 20), and
   - having at least one radar antenna (4), which is connected to the control circuit (8) via at least one supply line (58) and has a Rotman lens (22) and an antenna array (24),

   **characterized**

   - **in that** the control circuit (8) and the radar antenna (4) are arranged essentially parallel to one another, and
   - **in that** the Rotman lens (22) and the antenna array (24) are arranged essentially parallel to and at a distance from one another.

2. Radar sensor according to Claim 1, **characterized in that** the control circuit (8) and the radar antenna (4) are arranged essentially on one plane.

3. Radar sensor according to Claim 1 or 2,
   **characterized**

   - **in that** a line mount (28) is provided, and
   - **in that** lines (30) for the transmission of radiofrequency signals are arranged on the line mount (28), between the control circuit (8) and the at least one supply line (58) to the radar antenna (4),
   - with the line mount (28) being arranged between the control circuit (8) and the radar antenna (4).

4. o Radar sensor according to Claim 3, **characterized in that** the lines (30) run essentially on one plane parallel to the conductor tracks of the control circuit (8) and of the at least one supply line (58).

5. Radar sensor according to Claim 3 or 4, **characterized in that** the lines (30) run essentially at the same height as the conductor tracks of the control circuit (8) and as the at least one supply line (58).

6. Radar sensor according to one of Claims 3 to 5, **characterized in that** the lines (30) are in the form of microstrip lines on the line mount (28).

7. Radar sensor according to one of Claims 3 to 6, **characterized in that** the line mount (28) is composed of GaAs.

8. Radar sensor according to one of Claims 3 to 7, **characterized in that** a circuit mount (32) is provided, to which the at least one MMIC component (18, 20) of the control circuit (8), the line mount (28) and, at least in places, the radar antenna (4) are connected, preferably by means of an adhesive.

9. Radar sensor according to one of Claims 3 to 8, **characterized in that** the material of the circuit mount (32) is matched to the thermal expansion behaviour of the substrates of the at least one MMIC component (18, 20) of the control circuit (8), of the line mount (28) and of the radar antenna (4).

10. Radar sensor according to Claim 8 or 9, **characterized in that** the circuit mount (32) is composed of $Al_2O_3$.

11. Radar sensor according to one of Claims 8 to 10, **characterized in that** lines (48) are formed on the substrate of the circuit mount (32), for signal transmission between the lines (30) on the line mount (28) and the supply line connections (58) of the radar antenna (4).

12. Radar sensor according to one of Claims 3 to 11, **characterized in that** wire-bonding connections (31) are formed between the lines (30) and the at least one supply line (58) to the radar antenna (4).

13. Radar sensor according to one of Claims 3 to 11, **characterized in that** electromagnetic field couplings (34) are formed between the lines (30) and the at least one supply line (58) to the radar antenna (4).

14. Radar sensor according to one of Claims 1 to 13, **characterized in that**

   - the Rotman lens (22) has a parallel plate line (56) in the form of a lens, at least two supply line connections (58), a plurality of coupling connections (60) and delay lines (62), and
   - the antenna array (24) has a plurality of individual antennas (64) which are each connected in series to form at least two rows (66).

15. Radar sensor according to Claim 14, **characterized**

   - **in that** the Rotman lens (22) is formed on a first substrate (72), and the antenna array (24) is formed on a second substrate (74),
   - **in that** the two substrates (72, 74) are connected to one another by their sides facing away from the Rotman lens (22) and the antenna array (24), and
   - **in that** a common metallization layer (76) is arranged between the two substrates (72, 74).

16. Radar sensor according to Claim 15, **characterized in that** the metallization layer (76) is used as a common earth potential.

17. Radar sensor according to one of Claims 15 or 16, **characterized in that** coupling slots (78) are formed in the metallization layer (76) and electromagnetically couple the connecting points (80) of the rows (70) of individual antennas (64) to the connecting points (82) of the delay lines (62).

18. Radar sensor according to Claim 17, **characterized in that** the connecting points (80) of the rows (70) of individual antennas (64) are arranged essentially in the centre of the rows (70).

19. Radar sensor according to one of Claims 14 to 18, **characterized in that** the substrates (72, 74) for the Rotman lens (22) and the antenna array (24) are composed of a ceramic-filled composite of polytetrafluoroethylene (PTFE).

20. Radar sensor according to one of Claims 14 to 19, **characterized in that** the substrates for the Rotman lens (22) and for the antenna array (24) have different dielectric constants.

**Revendications**

1. Capteur radar, notamment pour une surveillance de l'environnement d'un véhicule automobile,

   - comprenant un circuit de commande (8) qui est réalisé sous la forme d'un module d'émission et/ou de réception et présente au moins un composant MMIC (Monolitic Millimeterwave Integrated Circuit - Circuit intégré monolithique à ondes millimétriques) (19, 20) et
- comprenant au moins une antenne radar (4) qui est reliée avec le circuit de commande (8) par le biais d'au moins une ligne d'arrivée (58) et une lentille Rotman (22) ainsi qu'une antenne en réseau (24),

**caractérisé en ce**

- **que** le circuit de commande (8) et l'antenne radar (4) sont pour l'essentiel disposés en parallèle l'un à l'autre et
- **que** la lentille Rotman (22) et l'antenne en réseau (24) sont pour l'essentiel disposées en parallèle et espacées l'une par rapport à l'autre.

2. Capteur radar selon la revendication 1, **caractérisé en ce que** le circuit de commande (8) et l'antenne radar (4) sont pour l'essentiel disposés dans un plan.

3. Capteur radar selon la revendication 1 ou 2, **caractérisé en ce**

- **qu'**il est prévu un support de lignes (28) et
- **que** des lignes (30) destinées à transmettre des signaux à haute fréquence entre le circuit de commande (8) et au moins une ligne d'arrivée (58) de l'antenne radar (4) sont disposées sur le support de lignes (28),
- le support de lignes (28) étant disposé entre le circuit de commande (8) et l'antenne radar (4).

4. Capteur radar selon la revendication 3, **caractérisé en ce que** les lignes (30) s'étendent pour l'essentiel dans un plan parallèle aux pistes conductrices du circuit de commande (8) et à l'au moins une ligne d'arrivée (58).

5. Capteur radar selon la revendication 3 ou 4, **caractérisé en ce que** les lignes (30) s'étendent pour l'essentiel sur une même hauteur que les pistes conductrices du circuit de commande (8) et que l'au moins une ligne d'arrivée (58).

6. Capteur radar selon l'une des revendications 3 à 5, **caractérisé en ce que** les lignes (30) sont réalisées sous la forme de lignes en microrubans sur le support de lignes (28).

7. Capteur radar selon l'une des revendications 3 à 6, **caractérisé en ce que** le support de lignes (28) est fabriqué en GaAs.

8. Capteur radar selon l'une des revendications 3 à 7, **caractérisé en ce qu'**il est prévu un support de circuit (32) avec lequel sont reliés l'au moins un composant MMIC (18, 20), le circuit de commande (8), le support de lignes (28) et au moins partiellement l'antenne radar (4), de préférence avec un adhésif.

9. Capteur radar selon l'une des revendications 3 à 8, **caractérisé en ce que** le matériau du support de circuit (32) est adapté au comportement de dilatation thermique du substrat de l'au moins un composant MMIC (18, 20), du circuit de commande (8), du support de lignes (28) et de l'antenne radar (4).

10. Capteur radar selon la revendication 8 ou 9, **caractérisé en ce que** le support de circuit (32) est fabriqué en $Al_2O_2$.

11. Capteur radar selon l'une des revendications 8 à 10, **caractérisé en ce que** des lignes (48) de transmission du signal entre les lignes (30) du support de circuit (28) et les bornes de ligne d'arrivée (58) de l'antenne radar (4) sont formées sur le substrat du support de circuit (32).

12. Capteur radar selon l'une des revendications 3 à 11, **caractérisé en ce que** des liaisons par fil métallique (31) sont formées entre les lignes (30) et l'au moins une ligne d'arrivée (58) de l'antenne radar (4).

13. Capteur radar selon l'une des revendications 3 à 11, **caractérisé en ce que** des couplages par champ électromagnétique (34) sont réalisés entre les lignes (30) et l'au moins une ligne d'arrivée (58) de l'antenne radar (4).

14. Capteur radar selon l'une des revendications 1 à 13, **caractérisé en ce que**

- la lentille Rotman (22) présente une ligne à plaques parallèles (56) en forme de lentille, au moins deux bornes de ligne d'arrivée (58), une pluralité de bornes d'accouplement (60) et de lignes à retard (62) et
- l'antenne en réseau (24) présente une pluralité d'antennes individuelles (64) qui sont à chaque fois branchées en série en au moins deux rangées (68).

**15.** Capteur radar selon la revendication 14,
**caractérisé en ce**

- **que** la lentille Rotman (22) est formée sur un premier substrat (72) et l'antenne en réseau (24) sur un deuxième substrat (74),
- **que** les deux substrats (72, 74) sont reliés entre eux par leurs côtés opposés à la lentille Rotman (22) ou à l'antenne en réseau (24) et
- **qu'**une couche de métallisation commune (76) est disposée entre les deux substrats (72, 74).

**16.** Capteur radar selon la revendication 15, **caractérisé en ce que** la couche de métallisation commune (76) sert de potentiel de masse commun.

**17.** Capteur radar selon l'une des revendications 15 ou 16, **caractérisé en ce que** des fentes de couplage (78) sont formées dans la couche de métallisation (76), lesquelles réalisent le couplage électromagnétique entre les points de raccordement (80) des rangées (70) d'antennes individuelles (64) et les points de raccordement (82) des lignes à retard (62).

**18.** Capteur radar selon la revendication 17, **caractérisé en ce que** les points de raccordement (80) des rangées (70) d'antennes individuelles (64) sont disposés pour l'essentiel au centre des rangées (70).

**19.** Capteur radar selon l'une des revendications 14 à 18, **caractérisé en ce que** les substrats (72, 74) pour la lentille Rotman (22) et l'antenne en réseau (24) sont fabriqués dans un matériau composite en polytétrafluoroéthylène (PTFE) rempli de céramique.

**20.** Capteur radar selon l'une des revendications 14 à 19, **caractérisé en ce que** les substrats pour la lentille Rotman (22) et l'antenne en réseau (24) présentent des constantes diélectriques différentes.

FIG. 1

FIG. 2

FIG. 3

FIG. 4

FIG. 5

FIG. 6

FIG. 7

FIG. 8

## FIG. 9

84    86

64

x

y

b

## FIG. 10

P' ein

90°    180°    90°

66,70

P ein

$Z_0$    $Z_1$    $Z_3$    $Z_0$

$Z_2$

84

64

P aus

86

## FIG. 11

66,70

$\lambda/2$    $\lambda$

84

86

80